# EUROPEAN PATENT SPECIFICATION

(11) **EP 3 747 679 B1**
(45) Date of publication and mention of the grant of the patent: **30.03.2022**
(21) Application number: 20305587.6
(22) Date of filing: 04.06.2020
(51) Int. Cl.: B60J 5/04

(54) **PUBLIC TRANSPORT VEHICLE COMPRISING AN IMPROVED DOOR SYSTEM**
ÖFFENTLICHES TRANSPORTFAHRZEUG MIT VERBESSERTEM TÜRSYSTEM
VÉHICULE DE TRANSPORT PUBLIC COMPRENANT UN SYSTÈME DE PORTE AMÉLIORÉ

(30) Priority: 04.06.2019 IT 201900007977
(43) Date of publication of application: 09.12.2020
(73) Proprietor: IVECO FRANCE S.A.S., 69200 Vénissieux (FR)
(72) Inventor: CODRON, Stephane, 69008 Lyon (FR)
(74) Representative: Faraldi, Marco

(56) References cited:
- EP-A1- 3 501 467
- GB-A- 2 131 752
- US-A- 5 577 793

## Description

### TECHNICAL FIELD

The invention relates to a door system for a vehicle, in particular a door for a public transport vehicle.

### PRIOR ART

Public transport vehicles generally comprise a door and a compartment for storing baggage, which are placed under the floor of the vehicle. This door can generally be accessed from the outside of the vehicle through different leaves, which are generally arranged in the side walls or in the rear wall of the vehicle.

The leaves generally comprise one single piece, which is connected to the wall thanks to a pantograph or through a sliding connection. However, since the leaves usually are large, they are complicated to handle because of their weight.

In order to solve this problem, actuators are installed, which are placed inside the compartment and are configured to automatically lift the leaf. It is clear, though, that, despite the fact that these actuators facilitate the opening of the leaf, the space available inside the compartment for the baggage decreases.

Furthermore, due to the position of the door close to the ground, namely at approximately 400 mm from the ground, passengers always find it difficult to place the baggage in the compartment, through the opening opened by the leaf.

Therefore, doors are needed, which can easily be opened by passengers and, in turn, allow the baggage to be easily introduced into the dedicated space, which has to be as large as possible.

Existing door systems are disclosed in documents US5577793 A, EP3501467 A1 or GB2131752 A.

The object of the invention is to solve the above-mentioned drawbacks in an optimized and economic manner.

### SUMMARY OF THE INVENTION

The objects mentioned above are reached by means of a public transport vehicle comprising a door system according to the appended claims.

### BRIEF DESCRIPTION OF THE DRAWINGS

Further features and advantages will be best understood upon perusal of the description hereinafter, which is provided by mere way of explanatory and non-limiting example, with reference to the accompanying drawings, wherein:
- figure 1 is a perspective view showing a public transport vehicle comprising a door system according to the invention;
- figure 2 is a partial, schematic, cross-sectional view of the vehicle of figure 1 comprising a door system according to the invention;
- figure 3 is a rear view of the vehicle of figure 1 comprising a door system according to the invention in a first operating phase; and
- figure 4 is a rear view of the vehicle of figure 1 comprising a door system according to the invention in a second operating phase.

### DETAILED DESCRIPTION OF THE INVENTION

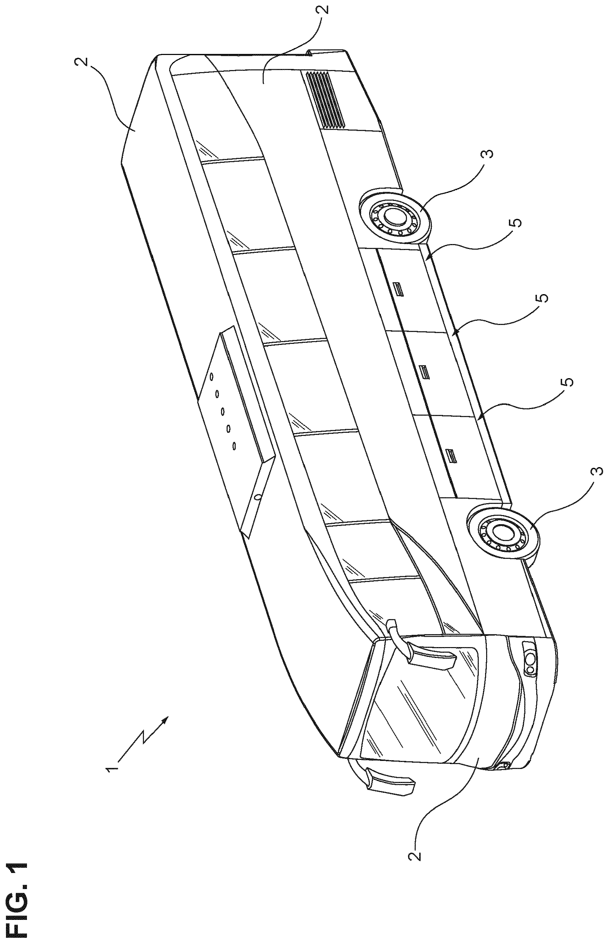

Figure 1 shows a public transport vehicle 1, for example a known bus, comprising a plurality of walls 2, which are configured to define a volume to accommodate passengers, and, as it is known, a plurality of wheels 3, on which the vehicle moves driven by one or more engines.

As it is known, the vehicle 1 can comprise, on at least one of the walls 2, at least one door system 5, which is configured to house baggage 7 of the passengers of the vehicle 1. In particular, the door system 5 is configured to define a first closed position, in which an inner volume 6 designed to transport baggage 7 is isolated relative to the outside and in which the profile of the door system 5 is continuous with the profile of the wall 2 on which it is carried.

The door system 5 is also configured to define a second open position, in which the inner volume 6 can communicate with the outside so that the baggage 7 of the passengers can be introduced (or removed).

In the case shown herein, the vehicle 1 comprises three door systems 5, which are obtained on a side wall 2 of the vehicle 1 and are basically placed at the same height as the wheel 3 of the vehicle 1. As a consequence, the volume 6 is placed under a floor of the vehicle 1 (which is not shown).

Therefore, in the embodiment described herein, the door system 5 is configured to selectively close an opening 8, which, according to the embodiment described herein, has a substantially rectangular shape and, hence, comprises an upper edge 8a and a lower edge 8b.

According to the invention, the door system 5 comprises a first and a second leaf 9, 10, each carried by a wall 2 independently of the other one; the first leaf 9 is configured to release a part of the opening 8 and the second leaf 10 is configured to release another part of the opening 8 and, at the same time, to provide a support for loading the baggage 7 into the volume 6.

More in detail, the first leaf 9 is an upper leaf, which is connected to the upper edge 8a of the opening 8 in a movable manner so as to occupy a first position, in which it partially covers the opening 8 and defines a profile that is continuous with the one of the wall 2, and a second position, in which is partially releases the opening 8 and is placed above the upper edge 8, parallel to the side wall 2.

As a consequence, the second leaf 10 is a lower leaf, which is connected to the lower edge 8b in a movable manner and is configured to occupy a first position, in which it partially covers the opening 8 and defines a profile that is continuous with the one of the wall 2, and a second position, in which is partially releases the opening 8 and defines a support to load the baggage 7 into the volume 6.

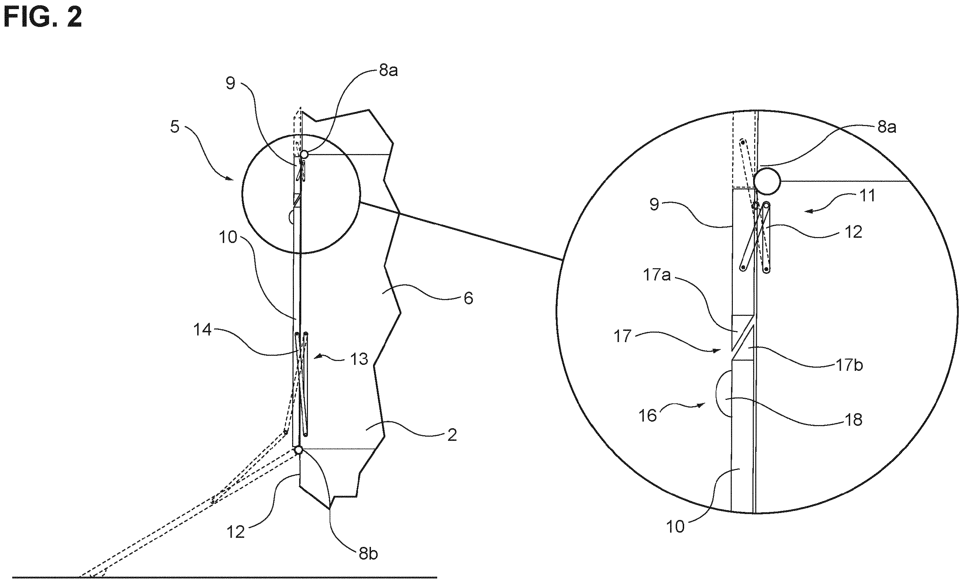

In particular, with reference to figure 2 and to the embodiment described therein, the first leaf 9 is connected to the wall 2 thanks to movement means 11, which are housed inside the space 6 and are configured to move the first leaf 9 from the first to the second position, so that it is opposite the side wall 2 on the outside. The movement means 11 advantageously comprise a pantograph mechanism 12, which is configured to move the first leaf 9 according to a predetermined trajectory, when a traction force is applied to the latter towards the outside by a user of the vehicle 1, for example through a handle (not shown) carried by the first leaf 9.

With reference to the embodiment described herein, again, the second leaf 10 is connected to the wall 2 thanks to movement means 13, which are housed inside the space 6 and are configured to move the second leaf 10 from the first to the second position, so as to define a tilted plane between the ground and the lower edge 8b of the opening 8. The plane is preferably tiled by approximately 35° relative to the ground.

The movement means 13 advantageously comprise a pantograph mechanism 12, which is configured to move the second leaf 10 according to a predetermined trajectory, when a traction force is applied to the latter towards the outside by a user of the vehicle 1, for example through a handle (not shown) carried by the second leaf 10.

Therefore, according to the embodiment described above, the movement means 11 and 13 preferably are merely mechanical movement means, with no electric or fluid-driven operation.

Furthermore, the second leaf 10 advantageously comprises supporting means 16, which are carried by the second leaf 10 and are configured to allow the latter to flexibly rest on the ground in the aforesaid second position. The supporting means 16 are preferably carried by the second leaf 10' on the outside relative to the volume 6.

In particular, the supporting means 16 can comprise a rubber component 18, which is placed so as to touch the ground before the upper end of the second leaf 10, thus allowing for a flexible support in order not to damage the outer profile of the second leaf 10. The rubber component 18, if necessary, can be inflatable and be controlled by a dedicated control unit.

Furthermore, the door system 5 can advantageously comprise isolation means 17 between the first and the second leaf 9, 10, which are configured to isolate the volume 6 from the outside, namely to isolate it from water and/or dust when the first and the second leaf 9, 10 are in the first closed position.

Said isolation means 17 preferably comprise rubber elements. According to the embodiment described herein, the isolation means 17 comprise a first rubber element 17a, which is carried by the first leaf 9 along the lower edge thereof (in the closed position), and a second rubber element 17b, which is carried by the second leaf 9 along an upper edge (in the closed position).

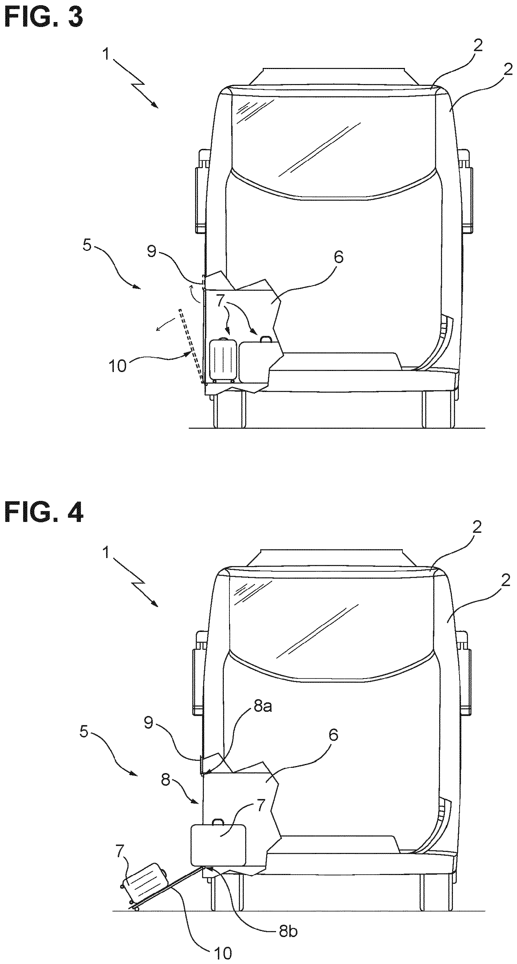

The operation of the door system 5 according to the invention will now be described with reference to figures 3 and 4.

In the configuration shown in figure 3, the first and the second leaf 9, 10 are in the closed position and, thanks to the isolation means 17, water and other elements cannot access the volume 6. Obviously, in this configuration, the two leaves 9, 10 are held in this state by a known locking means (which is not shown and not described in detail for the sake of brevity).

In order to shift to the configuration of figure 4, users release the door system 5 and lift the first leaf 9, which, thanks to the movement means 11, moves so as to be opposite, on the outside, and in front of the wall 2, thus completely releasing the space of the opening 8, which was previously occupied by it. In this way, users allow the second leaf 10 to rotate in a pivoted manner so that the second leaf 10, thanks to the movement means 13, becomes a tilted plane relative to the ground and releases the space of the opening 8, which was previously occupied by it. In this configuration, the supporting means 16 avoid a direct contact when the leaf 10 is in contact with the ground.

When the door system 5 is in its open configuration of figure 4, users can easily introduce (or remove) baggage 7, having it slide on the tilted plane defined by the second leaf 10.

Owing to the above, the advantages of a public transport vehicle comprising a door system 5 according to the invention are evident.

The door system 5 can easily be opened with no effort by vehicle users and ensures that no inner space 6 available for baggage 7 is wasted to house actuators.

Furthermore, the positioning of the second leaf 10 as tilted plane allows baggage 7 to be easily introduced (and grabbed), thanks to the possibility of having it slide along the tilted plane and thanks of the possibility of using the entire space of the opening 8.

The use of the supporting means 16 ensures that the outer surface of the second leaf 10 is not damaged when it is in the open position, in contact with the ground.

The particular configuration of the mechanical movement means 11, 13 allows the first and the second leaf 9, 10 to be opened in an economic and compact fashion.

The use of the isolation means 17 allows the inner volume 6 of the door 5 to be perfectly isolated in the closed configuration.

Finally, the public transport vehicle comprising a door system 5 according to the invention can clearly be subjected to changes and variants, which, though, do not go beyond the scope of protection set forth in the claims.

Indeed, the shape of the first and of the second leaf 9, 10 and of the opening 8 described herein can change depending on the size and type of the vehicle 1.

Moreover, the movement means 11, 13, the isolation means 17 and the supporting means 16 ban be replaced by devices that are equivalent to the ones described above.

## Claims

1. A road vehicle (1) for public transport, said vehicle (1) comprising a plurality of walls (2) which define a space for accommodating said passengers, said vehicle (1) comprising a door system (5) for housing objects (7), said door system (5) comprising a first leaf (9) and a second leaf (10) each carried independently of one another by one of said walls (2) of said vehicle (1), said first and said second leaves (9, 10) being configured to define a first position in which they cover an opening (8) obtained in said wall (2) and a second position in which they release said opening (8) and wherein the first leaf (9) is juxtaposed to said wall (2) and the second leaf (10) defines a support plane for the passage of said objects (7) through said opening (8), **characterised in that** said first leaf (9), in said second position, is positioned frontally juxtaposed with respect to said wall (2) on the outside of the vehicle (1) so as to completely release said opening (8).

2. The vehicle according to claim 1, wherein said first leaf (9) is positioned below said second leaf (10).

3. The vehicle according to one of the claims from 1 to 2, wherein said second leaf (10) defines, in said second position, a plane tilted with respect to the ground.

4. The vehicle according to one of the claims from 1 to 3, wherein said second leaf (10) comprises supporting means (16) for allowing said second leaf (10) to rest on the ground without a direct contact of said second leaf (10) on the ground.

5. The vehicle according to claim 4, wherein said supporting means (16) comprise a rubber element.

6. The vehicle according to the preceding claims, wherein said first and said second leaves (9, 10) have, in said first position, a continuous profile with respect to that of the wall (2).

7. The vehicle according to the preceding claims, wherein said door system (5) comprises movement means (11, 13) configured to guide the movement of said first and said second leaves (9, 10) when a traction force is applied to the latter from the outside.

8. The vehicle according to claim 7, wherein said movement means (11, 13) are mechanical means.

9. The vehicle according to the preceding claims, wherein said door system (5) comprises isolation means (17) carried by at least one from among the first and the second leaves (9, 10) and configured to isolate a space (6) that can be accessed through said opening (8).

10. The vehicle according to claim 9, wherein said isolation means (17) comprise rubber elements.

## Patentansprüche

1. Straßenfahrzeug (1) für den öffentlichen Transport, welches Fahrzeug (1) eine Mehrzahl von Wänden (2) umfasst, die einen Raum zur Aufnahme von Fahrgästen begrenzen, welches Fahrzeug (1) ferner ein Türsystem (5) zur Lagerung von Objekten (7) umfasst, welches Türsystem (5) ein erstes Blatt (9) und ein zweites Blatt (10) umfasst, von denen jedes unabhängig vom anderen von einer der Wände (2) des Fahrzeugs (1) getragen wird, wobei die ersten und zweiten Blätter (9,10) dazu ausgebildet sind, eine erste Position einzunehmen, in welcher sie eine Öffnung (8) in der Wand (2) abdecken, und eine zweite Position, in welcher sie die Öffnung (8) freigeben und in welcher das erste Blatt (9) der Wand (2) gegenübergestellt ist und das zweite Blatt (10) eine Tragebene für die Passage von Objekten (7) durch die Öffnung (8) bildet,
**dadurch gekennzeichnet, dass** das erste Blatt (9) in der zweiten Position frontal der Wand (2) gegenüberliegend außerhalb des Fahrzeugs (1) angeordnet ist, so dass es die Öffnung (8) vollständig freigibt.

2. Fahrzeug gemäß Anspruch 1, bei welchem das erste Blatt (9) unterhalb des zweiten Blatts (10) angeordnet ist.

3. Fahrzeug gemäß einem der Ansprüche 1 bis 2, bei welchem das zweite Blatt (10) in der zweiten Position eine Ebene definiert, die bezüglich des Bodens geneigt ist.

4. Fahrzeug gemäß einem der Ansprüche 1 bis 3, bei welchem das zweite Blatt (10) Tragmittel (16) umfasst, die es dem zweiten Blatt (10) erlauben, auf dem Boden ohne direkten Kontakt des zweiten Blatts (10) mit dem Boden zu ruhen.

5. Fahrzeug gemäß Anspruch 4, bei welchem Tragmittel (16) ein Gummielement umfassen.

6. Fahrzeug gemäß den vorhergehenden Ansprüchen, bei welchem die ersten und zweiten Blätter (9, 10) in der ersten Position ein durchgehendes Profil bezüglich demjenigen der Wand (2) aufweisen.

7. Fahrzeug gemäß den vorhergehenden Ansprüchen, bei welchem das Türsystem (5) Bewegungsmittel (11, 13) umfasst, ausgebildet zur Führung der Bewegung der ersten und zweiten Blätter (9, 10), wenn eine Zugkraft auf die letzteren von außen wirkt.

8. Fahrzeug gemäß Anspruch 7, bei welchem die Bewegungsmittel (11, 13) mechanische Mittel sind.

9. Fahrzeug gemäß einem der vorhergehenden Ansprüche, bei welchem das Türsystem (5) Isoliermittel (17) umfasst, die von zumindest einem der ersten und zweiten Blätter (9, 10) getragen werden und dazu ausgebildet sind, einen Raum (6) zu isolieren, der durch die Öffnung (8) zugänglich ist.

10. Fahrzeug gemäß Anspruch 9, bei welchem die Isoliermittel (17) Gummielemente umfassen.

## Revendications

1. Véhicule routier (1) de transport public, ledit véhicule (1) comprenant une pluralité de parois (2) qui définissent un espace permettant d'accueillir lesdits passagers, ledit véhicule (1) comprenant un système de porte (5) permettant de loger des objets (7), ledit système de porte (5) comprenant un premier battant (9) et un second battant (10) portés chacun indépendamment l'un de l'autre par l'une desdites parois (2) dudit véhicule (1), lesdits premier et second battants (9, 10) étant configurés pour définir une première position dans laquelle ils couvrent une ouverture (8) obtenue dans ladite paroi (2) et une seconde position dans laquelle ils libèrent ladite ouverture (8) et dans lequel le premier battant (9) est juxtaposé à ladite paroi (2) et le second battant (10) définit un plan de support pour le passage desdits objets (7) à travers ladite ouverture (8),
**caractérisé en ce que**
ledit premier battant (9), dans ladite seconde position, est positionné juxtaposé frontalement par rapport à ladite paroi (2) sur l'extérieur du véhicule (1) de façon à libérer totalement ladite ouverture (8).

2. Véhicule selon la revendication 1, dans lequel ledit premier battant (9) est positionné en dessous dudit second battant (10).

3. Véhicule selon l'une des revendications 1 et 2, dans lequel ledit second battant (10) définit, dans ladite seconde position, un plan incliné par rapport au sol.

4. Véhicule selon l'une des revendications 1 à 3, dans lequel ledit second battant (10) comprend des moyens de support (16) permettant audit second battant (10) de reposer sur le sol sans contact direct dudit second battant (10) sur le sol.

5. Véhicule selon la revendication 4, dans lequel lesdits moyens de support (16) comprennent un élément en caoutchouc.

6. Véhicule selon les revendications précédentes, dans lequel lesdits premier et second battants (9, 10) ont, dans ladite première position, un profil continu par rapport à celui de la paroi (2).

7. Véhicule selon les revendications précédentes, dans lequel ledit système de porte (5) comprend des moyens de déplacement (11, 13) configurés pour guider le déplacement desdits premier et second battants (9, 10) lorsqu'une force de traction est appliquée à ces derniers depuis l'extérieur.

8. Véhicule selon la revendication 7, dans lequel lesdits moyens de déplacement (11, 13) sont des moyens mécaniques.

9. Véhicule selon les revendications précédentes, dans lequel ledit système de porte (5) comprend des moyens d'isolation (17) portés par au moins l'un parmi les premier et second battants (9, 10) et configurés pour isoler un espace (6) auquel on peut accéder à travers ladite ouverture (8).

10. Véhicule selon la revendication 9, dans lequel lesdits moyens d'isolation (17) comprennent des éléments en caoutchouc.
